# EUROPEAN PATENT SPECIFICATION

(11) **EP 2 316 794 B1**
(45) Date of publication and mention of the grant of the patent: **12.07.2017**
(21) Application number: 10188438.5
(22) Date of filing: 21.10.2010
(51) Int. Cl.: C01G 43/01

(54) **A PROCESS FOR THE PREPARATION OF URANIUM DIOXIDE WITH SPHERICAL AND IRREGULAR GRAINS**
VERFAHREN ZUR HERSTELLUNG VON URANIUMDIOXID MIT SPHÄRISCHEN UND UNREGELMÄSSIGEN KÖRNERN
PROCÉDÉ POUR LA PRÉPARATION DE DIOXYDE D'URANIUM AVEC DES GRAINS SPHÉRIQUES ET IRRÉGULIERS

(30) Priority: 27.10.2009 PL 38938509
(43) Date of publication of application: 04.05.2011
(73) Proprietor: Instytut Chemii i Techniki Jadrowej, 03-195 Warszawa (PL)
(72) Inventor: Chmielewski, Andrzej G., 04-802, Warszawa (PL); Deptula, Andrzej, 00-544 Warszawa (PL); Lada, Wieslawa, 00-172 Warszawa (PL); Olczak, Tadeusz, 03-285 Warszawa (PL); Brykala, Marcin, 03-599 Warszawa (PL); Wawszczak, Danuta, 05-120 Legionowo (PL)
(74) Representative: Brodowska, Iwona

(56) References cited:
- EP-A1- 1 035 075
- GB-A- 907 720
- US-A- 3 042 486
- P. LAINETTI, H.GRACHER RIELLA: "Preparation of ceramic grade UO2 powder by atomization from uranyl nitrate solutions", JOURNAL OF NUCLEAR MATERIALS, vol. 178, no. 2-3, 1991, pages 135-142, XP002631486, DOI: doi:10.1016/0022-3115(91)90378-K
- V. N. VAIDYA: "Status of sol-gel process for nuclear fuels", JOURNAL OF SOL-GEL SCIENCE AND TECHNOLOGY, vol. 46, no. 3, 2008, pages 369-381, XP002631487, DOI: 10.1007/s10971-008-1725-0

## Description

The subject matter of the invention is a process for the preparation of uranium dioxide with spherical and irregular grains.

The most important type of nuclear fuels used in power generation reactors are oxides of fissile elements (uranium with various degrees of enrichment with U²³⁵, at times with plutonium added). Oxide powders are compressed and sintered, and high-density blocks (>95% theoretical density) are placed in fuel rods. Starting in the 1960s, efforts were initiated to simplify the process by the vibration compaction of respective fractions of sintered spherical grains. One of the disadvantages of that fuel form is the fact that the reactor operating temperature is limited to at most 350°C due to the high temperature gradient between the centre of the fuel material in the rod (approx. 2300°C) and its surface (approx. 0.5 cm) which is water vapour-cooled. The restriction is because it is impossible to increase the reactor operating temperature above the limit due to a risk of core melting. A radical increase in reactor operating temperature (even up to 1000°C) is feasible only with a dramatically decreased diameter of the fuel element and the use of a gaseous cooling medium. This is carried out in High Temperature Gas-cooled Reactors (HTGR) in which spherical grains with <500 µm diameter and very high density act as the filler. It is widely known that the sol-gel method is practically the only process for the preparation of powders with spherical grains (J.Sol-Gel Sci Technol (2008) 46; 369-381 V.N. Vaidya "Status of sol-gel process for nuclear fuels"). Obviously, the process can be used also to prepare powders with irregular grains.

The process for the preparation of various types of chemical compounds in the powder form as the final product with spherical and irregular grains using an original version of the sol-gel method is known in the art. The original version of the process was patented by the Institute of Nuclear Chemistry and Technology (Patent PL83484 (1978), "Method for Preparing Spherical Grains of Metal Oxides"), known in scientific literature as the IChTJ Process (Institute of Nuclear Chemistry and Technology Process). It consists of the following stages:
1. Preparation of concentrated cation sol, preferably with a viscosity of >100 cSt by anion extraction from the aqueous solution of cation salts with the Primene JMT organic solvent.
2. Formation of sol emulsion in an organic solvent (2-ethylhexanol-1, EH), containing the SPAN-80 emulsifying agent.
3. Gelling the emulsion through water extraction using partly dehydrated EH.
4. Controlled chemical treatment.

The other process for the synthesis of ceramic materials from solutions known in the art is the process referred to as the Complex Sol-Gel Process (CSGP) in which a complexing agent, ascorbic acid (ASC), is added to the sol. The process has been successfully employed in many syntheses, e.g. for the preparation of oxides and oxide compounds (such as titanium dioxide, Li, Ba, Sr titanates, high-temperature superconductors, bioceramic materials, tungsten oxide and tungstenates, cathodic materials for lithium cells (Li-Co-Mn-Ni-O systems)). The results were disclosed in the already granted patents (PL172618 - A process for the preparation of high-temperature superconductors; PL179421 - A process for the preparation of hollow spherical grains of ceramic materials, cermetals and hydrogen-reducible metals; PL 198039 - A process for the preparation of titanium dioxide and lithium and barium titanates from titanium tetroxide; PL180602 - A process for the preparation of calcium phosphates, in particular hydroxyapatite). CSGP has never been used for the preparation of uranium oxide. The following documents are considered as relevant prior art:
D1 GB 907 720 A (OESTERR STUDIEN ATOMENERGIE)1O October 1962 (1962-10-10)
D2 US 3 042 433 A (FORWARD FRANK A ET AL) 3 July 1962 (1962-07-03)
D3 EP1 035 075 A1 (FUJI CHEM IND co LTD pm) 13 September 2000 (2000-09-13)
D4 P. LAINETTI, H.GRACHER RIELLA: "Preparation of ceramic grade U02 powder by atomization from uranyl nitrate solutions", JOURNAL OF NUCLEAR MATERIALS, vol. 178, no. 2-3, 1991, pages 135-142, DOI:10.1016/0022-3115(91)90378-K
D5 V. N. VAIDYA: "Status of sol-gel process for nuclear fuels", JOURNAL OF SOL-GEL SCIENCE AND TECHNOLOGY, vol. 46, no. 3, 2008, pages 369-381, DOI: 10.1007/s10971-O08-1725-O

Document **D1** discloses a process for producing UO2 by ion-exchange. Mud and hydrolysis products are separated from oil-field water by sedimentation, centrifugation, or filtration, and dissolved in an aqueous solution of 4N HCI. Document D2 discloses a process of producing reactor grade uranium dioxide reacting uranyl carbonate particles dispersed in an aqueous carbonic acid solution with carbon dioxide and a reducing gas at a temperature above about 150°C. Document D3 discloses the use of an organic acid (ascorbic acid) as prevent oxidation of the precursors during the synthesis of Li-Mn-M-B-O4-compound. Document D4 discloses a process for making ceramic grade UO2 by atomization of uranyl nitrate solutions. The denitrification step leads to an U3O8 intermediate, which is then reduced to UO2. Document D5 discloses a review of different sol-gel-process for preparing nuclear fuels. Using the process of the invention for the synthesis of uranium dioxide in a form of spherical and irregular grains, it is possible to take advantage of combined features of the aforementioned processes with their simultaneous simplification.

A process for the preparation of uranium dioxide UO₂ with irregular or spherical grains, using a sol-gel process, characterized in that, uranium trioxide, UO₃, UO₂(NO₃)₂x6H₂O is dissolved upon vigorous stirring in an ascorbic acid, and the resulting ascorbic-hydroxy-uranyl sol is evaporated to dryness, and the resulting gel is subjected to heat treatment at a temperature of 550[deg.]C with a heating rate of 5[deg.]C/min., in air atmosphere to U₃O₈; subsequently, the resulting oxide is reduced in hydrogen and/or argon atmosphere, preferably in hydrogen atmosphere, at a temperature of 1100[deg.]C to irregular uranium dioxide grains: or the resulting ascorbic-hydroxy-uranyl sol is added very slowly upon very vigorous stirring to an organic solvent selected from a group which consists of long-chain aliphatic alcohols, preferably n-octanol, in particular 2-ethylhexanol-1 (EH) which contains 1 volume % of sorbitol monooleate, whereby the gelling process is terminated when after switching off the stirrer, the brown-violet spherical grains which are falling to the bottom have no tendency to stick to one another and to create larger aggregates and subsequently, the spherical gel powders are filtered, washed with acetone and subjected to heat treatment at a temperature of 550[deg.]C with a heating rate of 5[deg.]C/min., in air atmosphere to U₃O₈: subsequently, they are reduced in hydrogen and/or argon atmosphere, preferably in hydrogen atmosphere, at a temperature of 1100[deg.]C to spherical uranium dioxide grains.

A process characterized in that an organic acid in the solid form, preferably ascorbic acid, is added upon vigorous stirring in the 1:1 molar ratio to a solution of UO₂NO₃)₂x6H₂O; subsequently, ammonia solution is added until the pH is 4 and the resulting ascorbic-hydroxy-uranyl sol is subjected to heat treatment at above.

The process for the preparation of uranium dioxide with irregular grains of the invention consists in that uranium dioxide, UO₃, is dissolved upon vigorous stirring in an organic acid, preferably ascorbic acid. The resulting ascorbic-hydroxy-uranyl sol is evaporated to dryness, and the resulting gel is subjected to heat treatment at a temperature of 550°C with a heating rate of 5°C/min., in air atmosphere to U₃O₈; subsequently, the resulting oxide is reduced in hydrogen and/or argon atmosphere, preferably in hydrogen atmosphere, at a temperature of 1100°C to irregular uranium dioxide grains.

The process for the preparation of uranium dioxide powders with spherical grains of the invention consists in that uranium dioxide, UO₃, is dissolved upon vigorous stirring in an organic acid, preferably ascorbic acid. The resulting ascorbic-hydroxy-uranyl sol is added very slowly upon very vigorous stirring to an organic solvent selected from a group which consists of long-chain aliphatic alcohols, such as n-octanol, preferably 2-ethylhexanol-1 (EH) which contains 1 volume % of sorbitol monooleate (SPAN-80). The gelling process is terminated when after switching off the stirrer, the brown-violet spherical grains which are falling to the bottom have no tendency to stick to one another and to create larger aggregates. Subsequently, the spherical gel powders are filtered, washed with acetone and subjected to heat treatment at a temperature of 550°C with a heating rate of 5°C/min., in air atmosphere to U₃O₈; subsequently, they are reduced in hydrogen and/or argon atmosphere, preferably in hydrogen atmosphere, at a temperature of 1100°C to spherical uranium dioxide grains.

The process for the preparation of uranium dioxide powders with irregular grains of the invention consists in that an organic acid in the solid form, preferably ascorbic acid, is added upon vigorous stirring in the 1:1 molar ratio to a solution of UO₂(NO₃)₂·6H₂O; subsequently, ammonia solution is added until the pH is 4. The resulting ascorbic-hydroxy-uranyl sol is evaporated to dryness, and the resulting gel is subjected to heat treatment at a temperature of 550°C with a heating rate of 5°C/min., in air atmosphere to U₃O₈; subsequently, the resulting oxide is reduced in hydrogen and/or argon atmosphere, preferably in hydrogen atmosphere at a temperature of 1100°C to irregular uranium dioxide grains.

The process for the preparation of uranium dioxide powders with spherical grains of the invention consists in that an organic acid in the solid form, preferably ascorbic acid, is added upon vigorous stirring in the 1:1 molar ratio to a solution of UO₂(NO₃)₂·6H₂O; subsequently, ammonia solution is added until the pH is 4. The resulting ascorbic-hydroxy-uranyl sol is added very slowly upon very vigorous stirring to an organic solvent selected from a group which consists of long-chain aliphatic alcohols, such as n-octanol, preferably 2-ethylhexanol-1 (EH) which contains 1 volume % of sorbitol monooleate (SPAN-80). The gelling process is terminated when after switching off the stirrer, the brown-violet spherical grains which are falling to the bottom have no tendency to stick to one another and to create larger aggregates. Subsequently, the spherical gel powders are filtered, washed with acetone and subjected to heat treatment at a temperature of 550°C with a heating rate of 5°C/min., in air atmosphere to U₃O₈; subsequently, they are reduced in hydrogen and/or argon atmosphere, preferably in hydrogen atmosphere at a temperature of 1100°C to spherical uranium dioxide grains.

The process for the preparation of uranium dioxide powders with spherical grains of the invention consists in that UO₂(NO₃)₂·6H₂O is dissolved in an organic acid, preferably ascorbic acid, and the resulting ascorbic-hydroxy-uranyl sol is added very slowly upon very vigorous stirring to an organic solvent selected from a group which consists of long-chain aliphatic alcohols, preferably n-octanol, in particular 2-ethylhexanol-1 (EH) which contains 1 volume % of an emulsifying agent, preferably sorbitol monooleate, whereby the gelling process is terminated when after switching off the stirrer, the brown-violet spherical grains which are falling to the bottom have no tendency to stick to one another and to create larger aggregates and subsequently, the spherical gel powders are filtered, washed with acetone and subjected to heat treatment at a temperature of 550°C with a heating rate of 5°C/min., in air atmosphere to U₃O₈; subsequently, they are reduced in hydrogen and/or argon atmosphere, preferably in hydrogen atmosphere at a temperature of 1100°C to spherical uranium dioxide grains. The process of the invention consists in that an organic acid, preferably ascorbic acid, is added to UO₃ or a uranyl salt until ascorbic-hydroxy-uranyl sol forms.

The unquestionable advantage of the process of the invention is the combination of both simplified CSGP processes and the ICHTJ process, because the duration of the synthesis of uranium dioxide in the form of powders with irregular and particularly spherical grains is significantly reduced with the whole process being much simpler and costs to be involved in routine manufacture being much lower. Furthermore, starting from two distinct uranium compounds for the preparation of the ascorbic-hydroxy-uranyl sol and applying a combination of both methods in a simple way, the desired final product is obtained, being powders with irregular grains and powders with spherical grains, which ensures a high degree of packing. Furthermore, the process for the reduction of the resulting U₃O₈ to UO₂ needed for the manufacture of reactor fuel is carried out as the last stage, that is, in the presence of hydrogen rather than in air atmosphere during heat treatment. This is another advantage which simplifies the process.

The invention is illustrated by the following examples.
**Example I.** 3 g of UO₃ manufactured by The British Drug Mouse LTD was dissolved upon vigorous stirring in 11 mL of 1 M ascorbic acid, ASC - L-Ascorbic acid from Aldrich in a Sovirel reactor with a stirrer. The resulting ascorbic-hydroxy-uranyl sol was evaporated to dryness using a Buchi evaporator, and the resulting gel was subjected to heat treatment at a temperature of 550°C with a heating rate of 5°C/min., in air atmosphere to U₃O₈; subsequently, it was reduced in hydrogen atmosphere at 1100°C to irregular uranium dioxide grains.
   The thermal analysis of the resulting product in a form of powder was carried out using a MOM derivatograph made in Hangary; calcination temperature was determined to be 550°C, whereby phase transition to U₃O₈ occurred. The analysis of the physical form of the resulting product was carried out using a scanning microscope (Zeiss DSM 942); it confirmed that the resulting uranium dioxide occurred as powder with irregular grains.
**Example II.** The ascorbic-hydroxy-uranyl sol prepared in Example I above was added very slowly to 300 mL of an organic solvent (2-ethylhexanol-1, EH) containing 1 volume % of SPAN-80 (both reagents from Aldrich) in a Sovirel reactor with a stirrer. The sol gelled when being added upon very vigorous stirring. The gelling process was considered terminated when after switching off the stirrer, the brown-violet spherical grains which were falling to the bottom were completely gelled and had no tendency to stick to one another and to create larger aggregates. The spherical powders were filtered, washed with acetone and subjected to heat treatment at a temperature of 550°C with a heating rate of 5°C/min., in air atmosphere to U₃O₈; subsequently, they were reduced in hydrogen atmosphere at 1100°C to spherical uranium dioxide grains.
   The thermal analysis of the resulting product in a form of powder was carried out using a MOM derivatograph made in Hangary; calcination temperature was determined to be 550°C, whereby phase transition to U₃O₈ occurred. The analysis of the physical form of the resulting product was carried out using a scanning microscope; it confirmed that the resulting uranium dioxide occurred as powder with spherical grains with a diameter of 5 to 120 µm.
**Example III.** 4.4 g of ascorbic acid was added upon vigorous stirring to 25 mL of UO₂(NO₃)₂·6H₂O solution manufactured by Chemapol Praha Czechoslovakia in 1:1 molar ratio in a Sovirel reactor with a stirrer and, subsequently, ammonia solution was added until the pH was 4. The resulting ascorbic-hydroxy-uranyl sol was evaporated to dryness using a Buchi evaporator, and the resulting gel was subjected to heat treatment at a temperature of 550°C with a heating rate of 5°C/min., in air atmosphere to U₃O₈; subsequently, it was reduced in hydrogen atmosphere at 1100°C to irregular uranium dioxide grains. The thermal analysis of the resulting product in a form of powder was carried out using a MOM derivatograph; calcination temperature was determined to be 550°C, whereby phase transition to U₃O₈ occurred. The analysis of the physical form of the resulting product was carried out using a scanning microscope; it confirmed that the resulting uranium dioxide occurred as powder with irregular grains.
**Example IV.** The ascorbic-hydroxy-uranyl sol prepared in Example III above was added very slowly to 300 mL of an organic solvent (2-ethylhexanol-1, EH) containing 1 volume % of SPAN-80 (both reagents from Aldrich) in a Sovirel reactor with a stirrer. The sol gelled when being added upon very vigorous stirring. The gelling process was considered terminated when after switching off the stirrer, the brown-violet spherical grains which were falling to the bottom were completely gelled and had no tendency to stick to one another and to create larger aggregates. The spherical powders were filtered, washed with acetone and subjected to heat treatment at a temperature of 550°C with a heating rate of 5°C/min., in air atmosphere to U₃O₈; subsequently, they were reduced in hydrogen atmosphere at 1100°C to spherical uranium dioxide grains.
   The thermal analysis of the resulting product in a form of powder was carried out using a MOM derivatograph; calcination temperature was determined to be 550°C, whereby phase transition to U₃O₈ occurred. The analysis of the physical form of the resulting product was carried out using a scanning microscope; it confirmed that the resulting uranium dioxide occurred as powder with spherical grains with a diameter of 5 to 120 µm.
**Example V.** 12.55 g of UO₂(NO₃)₂·6H₂O manufactured by Chemapol Praha Czechoslovakia was dissolved upon vigorous stirring in 25 mL of 1 M ascorbic acid, ASC - L-Ascorbic acid from Aldrich in a Sovirel reactor with a stirrer; subsequently, ammonia solution was added until the pH was 4. The resulting ascorbic-hydroxy-uranyl sol was added very slowly to 300 mL of an organic solvent (2-ethylhexanol-1, EH) containing 1 volume % of SPAN-80 (both reagents from Aldrich). The sol gelled when being added upon very vigorous stirring. The gelling process was considered terminated when after switching off the stirrer, the brown-violet spherical grains which were falling to the bottom were completely gelled and had no tendency to stick to one another and to create larger aggregates. The spherical powders were filtered, washed with acetone and subjected to heat treatment at a temperature of 550°C with a heating rate of 5°C/min., in air atmosphere to U₃O₈; subsequently, they were reduced in hydrogen atmosphere at 1100°C to spherical uranium dioxide grains.

## Claims

1. A process for the preparation of uranium dioxide with irregular grains using a sol-gel process, **characterised in that**, uranium trioxide, UO₃ or solution of UO₂(NO₃)₂·6H₂O; is dissolved upon vigorous stirring in an ascorbic acid, or an ascorbic acid in the solid form is added upon vigorous stirring in the 1:1 molar ratio to a solution of UO₂(NO₃)₂·6H₂O; subsequently, ammonia solution is added, until the pH is 4, and the resulting ascorbic-hydroxy-uranyl sol is evaporated to dryness, and the resulting gel is subjected to heat treatment at a temperature of 550°C with a heating rate of 5°C/min., in air atmosphere to U₃O₈; subsequently, the resulting oxide is reduced in hydrogen and/or argon atmosphere, preferably in hydrogen atmosphere, at a temperature of 1100°C to irregular uranium dioxide grains or the resulting ascorbic-hydroxy-uranyl sol is added very slowly upon very vigorous stirring to an organic solvent selected from a group which consists of long-chain aliphatic alcohols, n-octanol or 2-ethylhexanol-1 (EH) which contains 1 volume % of sorbitol monooleate, whereby the gelling process is terminated when after switching off the stirrer, the brown-violet spherical grains which are falling to the bottom have no tendency to stick to one another and to create larger aggregates and subsequently, the spherical gel powders are filtered, washed with acetone and subjected to heat treatment at a temperature of 550°C with a heating rate of 5°C/min., in air atmosphere to U₃O₈; subsequently, they are reduced in hydrogen and/or argon atmosphere, preferably in hydrogen atmosphere, at a temperature of 1100°C to spherical uranium dioxide grains.

## Patentansprüche

1. Verfahren zur Herstellung von Urandioxid mit dem unregelmäßigen Korn unter Anwendung vom Sol-Gel-Verfahren, **dadurch gekennzeichnet, dass** das Urantrioxid UO₃ oder die Lösung von UO₂(NO₃)₂·6H₂O unter kräftigem Rühren in einem Molverhältnis von 1:1 zu einer Lösung von UO₂(NO₃)₂·6H₂O kommt; dann wird die Lösung von Ammoniak hinzugefügt, um pH=4 zu erzielen, und so erhaltenes Askorbin-Hydroxy-Uran-Sol verdampft, und auf diese Weise erhaltenes Gel wird der Wärmebehandlung in der Temperatur von 550°C mit der Heirate 5°C/Min., in der Luftatmosphäre bis U₃O₈ unterzogen, und dann wird das Erhalten Oxid reduziert - in der Atmosphäre von Wasserstoff und/oder Argon, günstig ist in der Atmosphäre des Wasserstoffes in der Temperatur 1100°C bis Urandioxid mit dem nicht regelmäßigen Korn, oder das entstandene Askorbin-Hydroxy-Uran-Sol dosiert man sehr langsam bei dem sehr schnellen Mischen, ins organische Lösungsmittel, das von der Gruppe der aliphatischen langkettigen Alkoholen gewählt wurde, n-Oktanol oder 2-Ethyl-1-Hexanol (EH), das 1% des Volumens von Mono-Sorbitanoleat enthält, wobei das Gelverfahren dann endet, wenn nach dem Abschalten des Rührens die auf den Boden fallenden sphärischen braun-violetten Körner keine Neigung zum Kleben und zur Bildung von größeren Aggregaten haben, und dann werden die sphärischen Pulver des Gels filtriert, mit dem Aceton gewaschen und der Wärmebehandlung in der Temperatur 550°C mit der Geschwindigkeit des Aufwärmens 5°C/Min. in der Atmosphäre der Luft bis U₃O₈, und dann wir es in der Atmosphäre des Wasserstoffes und/oder Argons reduziert, günstig in der Atomsphäre des Wasserstoffes in der Temperatur 1100°C bis sphärischen Körnen des Uranoxides.

## Revendications

1. La méthode de préparation de dioxyde d'uranium à grains irréguliers, en utilisant un procédé sol-gel, est rélévatrice d'autant que le trioxyde d'uranium UO₃, ou la solution UO₂(NO₃)₂·6H₂O se dissout sous agitation vigoureuse dans l'acide ascorbique, ou l'acide ascorbique, sous forme solide est ajouté sous agitation vigoureuse, dans un rapport molaire 1:1, à une solution UO₂(NO₃)₂·6H₂O; puis une solution d'ammoniaque est ajoutée pour aller jusqu'à pH = 4, le sol ascorbine-hydroxy-uranyle obtenu est évaporé jusqu'à siccité et le gel ainsi obtenu est soumis à un traitement thermique à température de 550°C, avec une vitesse de chauffage 5°C/ min., dans l'atmosphère terrestre jusqu'à U₃O₈, ensuite on réduit l'oxyde obtenu dans l'atmosphère d'hydrogène à température de 550°C, à une vitesse de chauffage de 5°C/min. dans l'atmosphère terrestre à U₃O₈, après quoi on réduit l'oxyde obtenu, dans l'atmosphère d'hydrogène et /ou d'argon, de préférence l'atmosphère d'hydrogène à température de 1100°C, aux grains de dioxyde d'uranium irrégulièrs, ou on dose le sol ascorbine-hydroxy-uranyle obtenu très lentement, tout en agitant très rapidement, dans un solvant organique choisi du groupe comprenant les alcools aliphatiques à longue chaîne, le n-octanol ou le 2-éthyl-1-hexanol (EH) contenant 1% en volume de sorbitan monooléate, ou le processus de gélification se termine au moment ou après avoir désactiver le brassage, des grains sphériques brun violet qui tombent au fond ne tentent pas de former des plus grands agrégats et ensuite des poudres sphériques du gel sont filtrées, lavées avec du acétone et on les soumet à un traitement thermique à température de 550°C, avec la vitesse de chauffage de 5°C/min. dans une atmosphère terrestre U₃O₈ et réduit dans l'atmosphère d'hydrogène et/ou argon, de préférence d'hydrogène à température de 1100°C, jusqu'à obtenir des grains sphériques d'uranium.
